# EUROPEAN PATENT SPECIFICATION

(11) **EP 4 108 944 B1**
(45) Date of publication and mention of the grant of the patent: **17.04.2024**
(21) Application number: 21181535.2
(22) Date of filing: 24.06.2021
(51) Int. Cl.: F16C 25/02, F16C 17/10, F03D 7/02, F16C 41/00

(54) **YAW BEARING ASSEMBLY**
GIERLAGERANORDNUNG
ASSEMBLAGE DE PALIER D'ORIENTATION

(43) Date of publication of application: 28.12.2022
(73) Proprietor: Siemens Gamesa Renewable Energy A/S, 7330 Brande (DK)
(72) Inventor: Damgaard, Steen, 7400 Herning (DK); Fogh, Helge, 6852 Billum (DK); Jensen, Daniel Kai, 7100 Vejle (DK); Nielsen, Rune, 7430 Ikast (DK)
(74) Representative: SGRE-Association

(56) References cited:
- EP-A1- 3 597 903
- EP-A2- 2 306 008
- EP-A2- 2 396 542
- WO-A1-2017/162250
- US-A1- 2014 023 305

## Description

The present invention relates to a yaw bearing assembly configured to rotatably couple a nacelle to a tower of a wind turbine to allow a rotation of the nacelle relative to the tower about a yaw axis. The present invention further relates to a method of changing the preload and/or friction between a first yaw bearing component and a second yaw bearing component of a yaw bearing assembly.

Wind turbines are increasingly used for the generation of electrical energy. A wind turbine comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

Wind turbines usually comprise a yaw system to keep the rotor facing into the wind as the wind direction changes, thereby increasing the production of electrical energy during operation. Having a yaw error, i.e. the rotor axis of the wind turbine not being aligned to the wind, implies that a lower share of the energy in the wind will be running through the rotor area. For yawing, the yaw system rotates the nacelle relative to the tower about a substantially vertical axis, the yaw axis. The yaw system may be mounted directly at the bed frame of the nacelle.

For electrical yaw drives, the yaw system comprises one or more yaw drives. The yaw drives usually comprise an electric motor, a reduction gear and a shaft pinion engaged with a ring gear of the yaw bearing. Alternatively, hydraulic yaw drives can be used in the yaw system. Although the hydraulic actuators have higher maintenance rates due to leakage issues, they have a higher power to weight ratio than electrical yaw drives.

The yaw system further comprises yaw brakes which can apply a braking torque on the brake disc which is mounted between the tower flange and the yaw bearing.

An additional component of the yaw system is the yaw bearing assembly. The yaw bearing assembly allows a guided rotation of the nacelle relative to the fixed tower.

The yaw bearing assembly can comprise a roller bearing, such as four-point bearings, double-row four-point bearings or ball bearings, as disclosed in document EP 0 945 613 A2. This bearing structure enables the nacelle to yaw with little friction when the rotor blades track the wind as required. To maintain the nacelle in the position aligned with the wind and avoid a yaw error, yaw systems with a roller bearing have annular disc brakes and brake pads which can be hydraulically loaded. This setup is reliable but has high manufacturing costs due to the large parts produced.

Alternatively, the yaw bearing assembly can comprise a sliding bearing, as disclosed in document EP 2 396 542 A2 or in document EP 3 594 495 A1. In this case, the yaw bearing assembly comprises a yaw ring, which is fixed relative to the tower. In particular, the yaw ring is fixed to an upper flange of the tower. The nacelle comprises one or several drive motors with sprockets meshing with the gearing of the yaw ring. The yaw bearing assembly further comprises sliding pads, which are a type of sliding components, usually arranged as upper and lower sliding pads between the upper and lower side of the yaw ring and a respective sliding structure of the nacelle. The sliding pads are arranged in a ring form, so that all sliding pads together build a closed sliding ring. Sliding bearings have braking and damping properties which can make additional yaw brakes unnecessary. Additionally, the loads in the bed frame are reduced and the bending moment absorption increased compared to roller bearings.

Regarding further prior art, reference is made to EP 2 306 008 A2, WO 2017/162250, EP 3 597 903 A1, and US 2014/023305 A1. EP 2 306 008 A2 discloses yaw bearing assemblies according to the preamble of claim 1 including integrated brake assemblies.

Wind turbines have uneven loads and an uneven weight distribution on the yaw bearing assembly caused by the heavy weight of the generator and of the large rotors arranged at the hub. This results in a tilting moment or tilting force and thus in larger forces on the top sliding components in the front, e.g. in the direction of the hub, and the lower sliding components in the rear of the nacelle. Because of the increased force resting on these local sliding components, an uneven wear occurs in the sliding components arranged at the front and the lower sliding components arranged at the back. Due to the increased wear the sliding components need to be replaced more often.

Additionally, with recent developments of large-scale wind turbines resulted in longer and more flexible blades. To avoid collisions between the blade tips and the tower during the operation of the wind turbine, modern wind turbines adopt a rotor shaft tilt angle. This design aims to leave enough clearance between the blades and the tower. However, the tilting of the rotor shaft results in uneven loads and an uneven weight distribution on the yaw bearing assembly. Hence, due to the rotor shaft tilt angle and the weight of the drive train, the blades and the hub, the load on the sliding components of the yaw bearing assembly is not balanced. This leads to a higher wear rate for the sliding components with the highest load and to a lower wear rate for the sliding components with the lowest load. Hence, the time until the sliding components with the highest wear rate have to be replaced is much shorter than the time until the sliding components with the lowest wear rate have to be replaced, resulting in more service works to replace the worn sliding components. This results in high costs of replacement of worn sliding components, of no-operation of the wind turbine and of material costs.

Hence, the replacement of worn sliding components is an extremely complex, effortful and expensive operation. For replacing the sliding components, it is necessary to use a crane for lifting the nacelle off the yaw ring and then change the sliding components, as proposed in EP 2 461 021 A2. This operation is complex and expensive due to the heavy weight of the nacelle, weighing typically several hundreds of tons, particularly in offshore applications. Lifting the nacelle is necessary, as due to the uneven load the worn sliding components are constantly loaded and therefore in contact with the sliding structure and the yaw ring.

As an alternative to hoisting the nacelle by means of a crane, a sliding tool as disclosed in EP 3 139 034 A1 can be used. This tool arrangement comprises a sliding wedge which is to be inserted between the lifted and tilted nacelle and the yaw ring. However, this method of operation is very time consuming and effortful. Alternatively, EP 2 837 818 A1 discloses a yaw bearing assembly comprising a pocket for housing a hydraulic lifting device for lifting the nacelle relative to the tower such that a sliding component of the yaw bearing assembly can be replaced during maintenance. This system requires enough space for having a hydraulic lifting device close to the yaw system and is expensive.

The known methods and devices from the prior art to replace wear parts of the yaw bearing assembly of a wind turbine are complex, effortful and expensive. Thus, there is a desire to reduce or balance the wear rate of the sliding components in order to increase the maintenance interval length for replacing the sliding components of yaw bearing assemblies of wind turbines.

It is an object of the invention to provide a yaw bearing assembly with sliding components with a balanced wear rate or to decrease the wear rate of the sliding components with the highest wear rate of the yaw bearing assembly.

This is achieved by a yaw bearing assembly according to claim 1 and a method for of changing the preload and/or friction between a first yaw bearing component and a second yaw bearing component of a yaw bearing assembly according to claim 7.

According to the invention, a yaw bearing assembly configured to rotatably couple a nacelle to a tower of a wind turbine to allow a rotation of the nacelle relative to the tower about a yaw axis comprises a first yaw bearing component fixed to the tower or being integrally formed with the tower, a second yaw bearing component fixed to the nacelle or being integrally formed with the nacelle, and at least one sliding component having a sliding surface and being arranged between the first yaw bearing component and the second yaw bearing component.

Hence, the rotation of the nacelle relative to the tower is achieved through the yaw bearing assembly.

A sliding surface of the sliding component slides on a sliding surface of the first yaw bearing component or, alternatively, a sliding surface of the second yaw bearing component slides on a sliding surface of the sliding component.

If the sliding surface of the sliding component slides on the sliding surface of the first yaw bearing component, then the sliding components are arranged and fixed at the second yaw bearing component. They can be arranged for example in pockets of the second yaw bearing component.

If the sliding surface of the second yaw bearing component slides on the sliding surface of the sliding component, then the sliding components are arranged and fixed at the first yaw bearing component. They can be arranged for example in pockets of the first yaw bearing component.

According to the invention, at least one of the sliding components is an axially shiftable sliding component configured to axially shift in the direction of the yaw axis to change the preload and/or friction between the first yaw bearing component and the second yaw bearing component.

An axially shiftable sliding component changes the preload and/or friction between the first yaw bearing component and the second yaw bearing component while allowing the second yaw bearing component to rotate relative to the first yaw bearing component. The friction and/or preload can also be added on demand and adapted during the operation of the wind turbine.

Hence, depending on the axial position of the axially shiftable sliding component along the yaw axis, the preload or the friction between the first yaw bearing component and the second yaw bearing component can be varied. The more the sliding surface of the axially shiftable sliding component presses against the sliding surface of the first yaw bearing component or the second yaw bearing component, the higher the preload and/or the higher the friction of this axially shiftable sliding component. This allows to distribute the load supported by the second yaw bearing component on the first yaw bearing component in order to have a more equal load distribution along the sliding components of the yaw bearing, thereby reducing the load and, therefore, the wear rate, for the sliding components on which the highest load is exerted. This load is then more equally distributed to the other sliding components of the yaw bearing assembly. As the wear rate of the sliding components with the highest wear rate is reduced by means of the invention, the operational time of the sliding components before having to replace them will increase, thereby increasing the maintenance interval length. This reduces costs of maintenance and of materials, as during the lifetime of the wind turbine the sliding components of the yaw bearing assembly will be replaced less times compared to prior art wind turbines.

For axially shiftable sliding components, the sliding components are usually encapsulated. They can be encapsulated at the first yaw bearing component and the sliding surface of the second yaw bearing component slides on the sliding surface of the axially shiftable sliding components. Alternatively, they can be encapsulated at the second yaw bearing component and the sliding surface of the axially shiftable sliding components slides on the sliding surface of the first yaw bearing component.

According to the invention, the yaw bearing assembly comprises at least one further sliding component arranged between the first yaw bearing component and the second yaw bearing component. Having a plurality of sliding components is advantageous for a better load distribution over the yaw bearing assembly. Additionally, if a part or all of the sliding components are axially shiftable sliding components, the load distribution can be improved by adjusting the preload and/or friction of each single axially shiftable sliding component so as to balance the wear rate of the sliding components with the highest wear rate by distributing the load supported by the sliding components with the highest wear rate to other sliding components with a lower wear rate.

According to another preferred embodiment of the invention, the load on the sliding components is monitored by means of sensors. As the wear rate depends on the load on each sliding component, by distributing the load form the sliding components with the highest wear rate to other sliding components with a lower wear rate, the overall maintenance interval length is increased.

According to a preferred embodiment of the invention, the axially shiftable sliding component is engaged during the operation of the wind turbines at times when the load supported by the yaw bearing is higher than a specific threshold. The specific threshold can be for example set by the yaw bearing or the sliding bearing manufacturer. This might happen when the blades rotate at high speed, resulting in higher loads from the rotation of the rotor. This helps to distribute the load more evenly. When the load supported by the yaw bearing is lower than the specific threshold, then the axially shiftable sliding component is disengaged and the load is then supported by the other sliding components.

According to another preferred embodiment of the invention, if the axially shiftable sliding component is a sliding component with a higher wear rate than the neighboring sliding components, the axially shiftable sliding component is axially shifted in the direction of the yaw axis to reduce the preload and/or friction at the axially shiftable sliding component. This is advantageous to reduce the wear rate of the axially shiftable sliding components with a higher wear rate compared to the neighboring sliding components, thereby distributing the load on the neighboring sliding components.

An unbalanced weight distribution can be caused by the wear of sliding components of the yaw bearing assembly, as due to wear the sliding surface on the sliding components decreases and the load is distributed unevenly on neighboring sliding components. This effect can be balance as stated above with axially shiftable sliding components, which are able to compensate for an unbalanced weight distribution by changing the preload and/or friction of single sliding components.

According to another preferred embodiment of the invention, if the axially shiftable sliding component is a sliding component with a lower wear rate than the neighboring sliding components, the axially shiftable sliding component is axially shifted in the direction of the yaw axis to increase the preload and/or friction between the first yaw bearing component and the second yaw bearing component. This is advantageous to distribute the load on the sliding components and thereby reduce the wear rate of the sliding component with a higher wear rate compared to the neighboring sliding components, thereby distributing the load on the neighboring sliding components.

According to the invention, at least one of the further sliding components is a fixed sliding component configured to be axially fixed to a position at the first yaw bearing component or at the second yaw bearing component. The fixation of the fixed sliding component can be done during the assembly of the wind turbine and the fixed sliding component is kept at the fixed position until it is replaced during a maintenance task. Hence, the fixed sliding components are designed and assembled with a certain preload or distance between the first yaw bearing component and the second yaw bearing component and the position remains unchanged until the sliding component is worn or replaced.

For fixed sliding components, the sliding components are usually encapsulated. They can be encapsulated at the first yaw bearing component and therefore fixed to the first yaw bearing component, wherein the sliding surface of the second yaw bearing component slides on the sliding surface of the fixed sliding components. Alternatively, they can be encapsulated at the second yaw bearing component and therefore fixed to the second yaw bearing component, wherein the sliding surface of the fixed sliding components slides on the sliding surface of the first yaw bearing component.

Fixed sliding components are the ones used in conventional wind turbines. They are also called passive sliding bearings.

It is advantageous to have axially shiftable sliding components for the sliding components with the higher wear rate and fixed sliding components for the rest of the sliding components to reduce the manufacturing costs, as axially shiftable sliding components are more expensive than fixed sliding components. Then the preload and/or friction of the sliding components with the higher wear rate can be adjusted to balance the load distribution over the yaw bearing assembly.

It is also advantageous to have axially shiftable sliding components for the sliding components with the lowest wear rate and fixed sliding components for the rest of the sliding components, as the friction and/or preload can be increased to have a higher load support on the sliding components with the lowest wear rate, thereby contributing to a balanced load distribution over the yaw bearing assembly.

According to the invention, the plurality of sliding components comprising the one or more sliding components and the one or more further sliding components is divided into a first group of sliding components and a second group of sliding components, wherein the first group of sliding components is located at the front part of the yaw bearing assembly and the second group of sliding components is located at the rear part of the yaw bearing assembly.

Hence, the yaw bearing assembly comprises a front part, which is oriented towards the hub of the wind turbine and a rear part, which is oriented away from the hub of the wind turbine towards the rear part of the nacelle in the direction of the rotor axis. Therefore, a plurality of sliding components forming the first group of sliding components is arranged at the front part of the yaw bearing assembly and the rest of the sliding components forming the second group of sliding components is arranged at the rear part of the yaw bearing assembly.

This division is particularly advantageous in terms of load distribution. Due to the rotor shaft tilt angle and the weight of the drive train, the blades and the hub, the load on the sliding components of the yaw bearing assembly is not balanced. To account for the fact of an uneven load distribution, the yaw bearing assembly is divided into two groups, the first group being the group at the front part of the yaw bearing assembly and the second group being the group at the rear part of the yaw bearing assembly.

For some wind turbine models, the highest load might be supported by the sliding components of the first group at the front part of the yaw bearing assembly. In this case, the wear rate of the first group of sliding components is higher than the one of the second group of sliding components, resulting in earlier replacement of the sliding components of the first group than of the second group. In this case, by having axially shiftable sliding components in the first group of sliding components, the uneven load distribution can be balanced.

For other wind turbine models, the highest load might be supported by the sliding components of the second group at the rear part of the yaw bearing assembly. In this case, the wear rate of the second group of sliding components is higher than the one of the first group of sliding components, resulting in earlier replacement of the sliding components of the second group than of the first group. In this case, by having axially shiftable sliding components in the second group of sliding components, the uneven load distribution can be balanced.

Alternatively, the axially shiftable sliding components can be arranged at the group of sliding components with the lowest load and, therefore, the lowest wear rate. Then, the preload and/or friction can be increased for the group of sliding components with the lowest load to contribute to an even balance of the load distribution.

The effect of an uneven load distribution is increased in offshore applications due to the higher weight and loads transferred and supported by the yaw bearing assembly for this kind of turbines. The effect is also increased in the new generation wind turbines due to the increased size of the rotor and the blades.

According to another preferred embodiment of the invention, the first half of sliding components oriented towards the hub of the wind turbine can form the first group of sliding components. Similarly, the second half of sliding components oriented away from the hub and towards the rear part of the nacelle of the wind turbine can form the second group of sliding components.

According to the invention, the first group of sliding components only consists of axially shiftable sliding components. If the sliding components of the first group of sliding components are able to axially shift, the wear rate of the sliding components of the first group can be varied and the load is more equally distributed over all the sliding components.

According to the invention, the second group of sliding components comprises axially shiftable sliding components.

It can be the case that the rear part of the sliding components has the higher wear rate. Then, advantageously, the load can be more equally distributed by having axially shiftable sliding components in the second group of sliding components, with which the load distribution at the rear part can be reduced. Similarly, if the rear part of the sliding components has the lower wear rate, by having axially shiftable sliding components in the second group of sliding components the friction at the rear part can be increased through the axially shiftable sliding components, leading to a more equal load distribution.

According to another preferred embodiment of the invention, the second group of sliding components only consists of axially shiftable sliding components. Advantageously, all sliding components of the second group are axially shiftable sliding components.

According to the invention, the axially shiftable sliding component comprises a piston, a sliding pad, at least a seal and a pressure chamber. Through a hydraulic fluid inlet, a hydraulic fluid can enter the pressure chamber, thereby driving the piston along the yaw axis in the direction opposite to the pressure chamber through the generated pressure. This drives the sliding surface of the sliding pad towards the sliding surface of the first yaw bearing component or the second yaw bearing component, depending on where the axially shiftable sliding component is arranged or encapsulated, increasing the friction of the sliding surface of the sliding pad against the abutting sliding surface of the first yaw bearing component or the second yaw bearing component, thereby increasing the load taken by the axially shiftable sliding component. The seal or seals prevent the hydraulic fluid from escaping the pressure chamber, avoiding the risk of leakage.

According to another preferred embodiment of the invention, the axially shiftable sliding component is driven by an electric motor.

According to another preferred embodiment of the invention, the axially shiftable sliding component is driven by an actuator.

According to another preferred embodiment of the invention, the axially shiftable sliding component is driven by magnetic means.

According to another preferred embodiment of the invention, the axially shiftable sliding component is driven by pneumatic means.

According to another preferred embodiment of the invention, the first yaw bearing component is a yaw ring. The yaw ring is fixed relative to the tower. In particular, the yaw ring is fixed to an upper flange of the tower.

According to another preferred embodiment of the invention, the yaw bearing assembly further comprises a clamp ring. The clamp ring supports the load at the yaw bearing assembly. In particular, the clamp ring supports the load transferring from the second yaw bearing component to the first yaw bearing component. It can be arranged at the radial inner circumference or at the radial outer circumference of the yaw ring to support the yaw ring radially.

The clamp ring can be coupled to the second yaw bearing component. In particular, the clamp ring is coupled by a plurality of bolts or other fastening means, such as screws, pins, rivets, threads, studs or other longitudinal fastener used for fastening.

Alternatively, the clamp ring is integrally formed with the second yaw bearing component.

According to another preferred embodiment of the invention, at least one of the sliding components is arranged at the clamp ring. Particularly, at least one of the sliding components is encapsulated at the clamp ring. Particularly, a plurality of sliding components is arranged at the clamp ring and encapsulated at the clamp ring. Axially shiftable sliding components can be arranged at the clamp ring to balance the load distribution.

According to another preferred embodiment of the invention, an axial ring flange supports the clamp ring axially. With axially it is meant in the direction of the yaw axis. Hence, the axial ring flange connects the clamp ring to the second yaw bearing component.

According to another preferred embodiment of the invention, the yaw bearing assembly is coupled to a yaw brake assembly configured to apply a braking torque to lock the rotation of the nacelle about the yaw axis. This is advantageous to maintain the nacelle in a position aligned with the wind and avoid a yaw error.

According to another preferred embodiment of the invention, the yaw brake assembly comprises a brake disc and a brake pad. In particular, the brake disc is mounted between the tower flange and the yaw bearing. In particular the brake disc is an annular disc. In particular, the brake pads are hydraulically engaged and disengaged.

According to another preferred embodiment of the invention, the sliding components are lubricated to enhance the sliding of the sliding surfaces.

Yet another aspect of the invention relates to a method of changing the preload and/or friction between a first yaw bearing component and a second yaw bearing component of a yaw bearing assembly configured to rotatably couple a nacelle to a tower of a wind turbine to allow a rotation of the nacelle relative to the tower about a yaw axis, wherein the first yaw bearing component is fixed to the tower or integrally formed with the tower, wherein the second yaw bearing component is fixed to the nacelle or integrally formed with the nacelle, wherein the yaw bearing assembly further comprises at least one sliding component having a sliding surface and being arranged between the first yaw bearing component and the second yaw bearing component, wherein at least one of the sliding components is an axially shiftable sliding component, the method comprising the step of axially shifting the axially shiftable sliding component in the direction of the yaw axis.

In order to facilitate the understanding of the characteristics of the invention and being an integral part of this specification, some drawing sheets are attached on which figures, with an illustrative but not limiting character, the following is represented:
Figure 1 shows a schematic view of a wind turbine.
Figure 2 shows a cross-sectional view of a yaw bearing assembly with an inner yaw drive according to one embodiment of the invention.
Figure 3 shows a cross-sectional view of a yaw bearing assembly with an outer yaw drive according to another embodiment of the invention.
Figure 4 shows a perspective view of a yaw bearing assembly configured to be used with an outer yaw drive according to another embodiment of the invention.
Figure 5 shows a clamp ring comprising a plurality of clamps according to one embodiment of the invention, wherein the clamp ring shown in this figure can be arranged at the inner circumference of the yaw ring for support.
Figure 6 shows a clamp ring comprising a plurality of clamps according to another embodiment of the invention, wherein the clamp ring shown in this figure comprises a plurality of sliding components, which are a plurality of sliding pads.
Figure 7 shows a first yaw bearing component with an outer yaw drive comprising a yaw ring to which a plurality of clamps configured as a clamp ring are coupled.
Figure 8 shows a second yaw bearing component according to one embodiment of the invention with a sliding surface coupled to a support structure such as the bed frame of the wind turbine.
Figure 9 shows a second yaw bearing component according to another embodiment of the invention with a plurality of pockets for the encapsulation of the sliding components.
Figure 10 shows a second yaw bearing component according to another embodiment of the invention coupled to a clamp ring.
Figures 11 and 12 show an axially shiftable sliding component comprising a piston, a sliding pad, a plurality of seals and a pressure chamber.

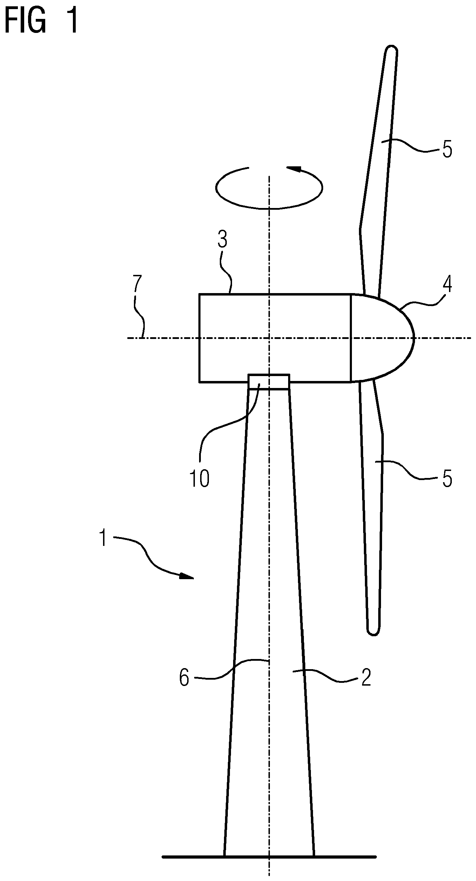

Figure 1 shows a schematic view of a wind turbine 1. The wind turbine 1 comprises a tower 2 on top of which a nacelle 3 is rotatably mounted by means of a yaw bearing assembly 10. The yaw bearing assembly 10 enables a rotation of the nacelle 3 relative to the tower 2 about a yaw axis 6. The wind turbine 1 further comprises a hub 4 which is connected to the nacelle 3. A plurality of blades 5 are mounted on the hub 4. The hub 4 is connected to a rotor and is rotatably mounted about a rotor axis 7 by means of a main bearing.

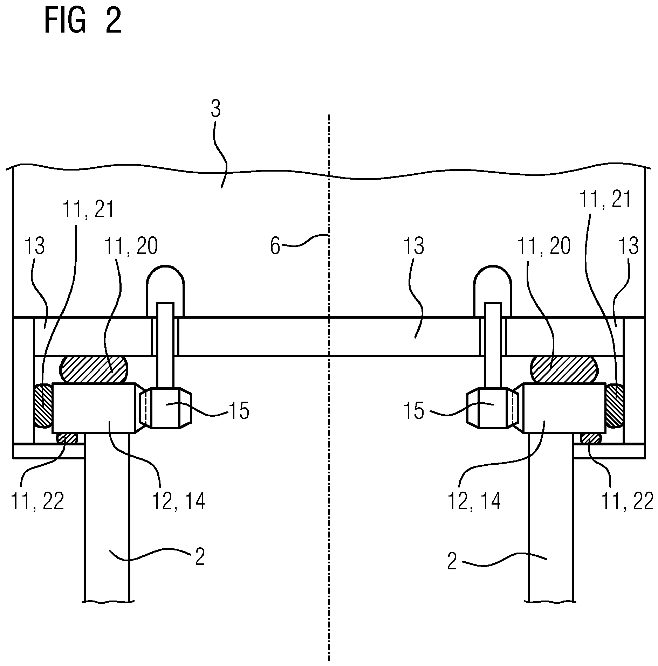

Figure 2 shows a cross-sectional view of a yaw bearing assembly 10 with an inner yaw drive 15 according to one embodiment of the invention. The yaw bearing assembly 10 comprises a first yaw bearing component 12 configured as a yaw ring 14, and which is directly joined to the tower 2. The yaw bearing assembly 10 also comprises a second yaw bearing component 13 which is directly joined to the nacelle 3. The second yaw bearing component 13 can be rotated relative to the first bearing component 12 about the yaw axis 6 by means of a set of inner yaw drives 15. With inner yaw drives 15, it is meant that the yaw drives are arranged at the radial inner part with respect to the first yaw bearing component 12.

The first yaw bearing component 12 and the second yaw bearing component 13 are in contact by sliding components, which allow the rotation of the second yaw bearing component 13 with respect to the first yaw bearing component 12. In Figure 2, a top-axial sliding pad 20, a radial sliding pad 21 and a bottom-axial sliding pad 22 are depicted. These sliding pads allow the rotation of the second yaw bearing component 13 relative to the first bearing component 12 about the yaw axis 6. The top-axial sliding pad 20, acting as a sliding component 11, is sandwiched between the first yaw bearing component 12 and the second yaw bearing component 13 and bears the main load or weight of the nacelle 3. In contrast, the radial sliding pad 21 and the bottom axial sliding pad 22 only bear additional loads exerted on the wind turbine 1. In this embodiment, the first yaw bearing component 12 is supported radially on the radially outer circumference of the yaw ring 14 by the radial sliding pads 21 and on the inner circumference by the inner yaw drives 15.

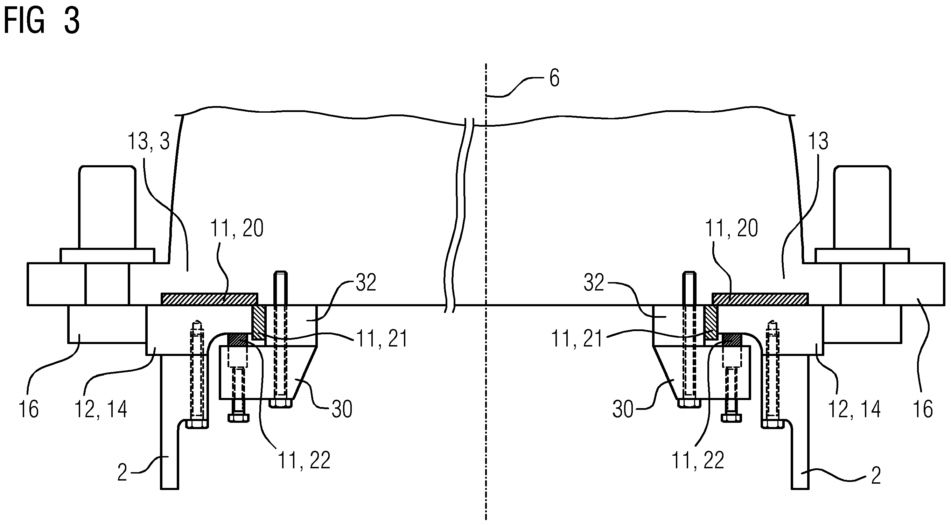

Figure 3 shows a cross-sectional view of a yaw bearing assembly 10 with an outer yaw drive 16 according to another embodiment of the invention. This embodiment differs from the one shown in Figure 2 in that yaw drives are outer yaw drives 16 arranged at the radial outer part with respect to the first yaw bearing component 12. Therefore, the outer yaw drives 16 are also arranged at the radial outer radius of the yaw bearing assembly 10.

A clamp ring 30 is arranged at the radial inner circumference of the yaw ring 14 of the first yaw bearing component 12 to support the first yaw bearing component 12. Hence, the first yaw bearing component 12 is supported radially on the outer side by the outer yaw drives 16 and on the inner side by the clamp ring 30, coupled to the first yaw bearing component 12 by means of radial sliding pads 21. The clamp ring 30 is coupled to the second yaw bearing component 13 by a plurality of bolts or other fastening means, such as screws, pins, rivets, threads, studs or other longitudinal fastener used for fastening. An axial ring flange 32 supports the clamp ring 30 axially, i.e. in the direction of the yaw axis 6. Hence, the axial ring flange 32 connects the clamp ring 30 to the second yaw bearing component 13. Both the axial ring flange 32 and the clamp ring 30 can have insertion holes for fastening the components to the second yaw bearing component 13.

The sliding components 11 can be lubricated with grease to enhance the sliding of the sliding surfaces 41.

The axial ring flange 32 also provides a guiding surface for the radial sliding pads 21 arranged and fixed at the inner circumference of the yaw ring 14. The axial ring flange 32 can be casted as a separate part from the clamp ring 30 and/or from the second yaw bearing component 13 or be an integral part of the clamp ring 30 and/or from the second yaw bearing component 13.

The connection of the clamp ring 30 over the axial ring flange 32 to the second yaw bearing component 13 can be done by fastening means, such as bolts. As the clamp ring 30 and the axial ring flange 32 are fixed to the second yaw bearing component 13 and, therefore, to the nacelle 3 of the wind turbine 1, radial sliding pads 21 and bottom-axial sliding pads 22 separate the first yaw bearing component 12 from the axial ring flange 32 and from the clamp ring 30 so that the axial ring flange 32 and the clamp ring 30 can rotate together with the second yaw bearing component 13 about the yaw axis 6 during yawing.

The yaw ring 14 is attached to a radial flange of the tower 2 by means of respective bolt connections.

In Figure 3, the sliding components 11 are encapsulated at the second yaw bearing component 13, the clamp ring 30 and the axial ring flange 32, which are fixed together. More specifically, the top-axial sliding pads 20 are encapsulated at the second yaw bearing component 13, bottom-axial sliding pads 22 are encapsulated at the clamp ring 30 and radial sliding pads 21 are encapsulated at the axial ring flange 32. Any of these sliding components 11 is suited to be an axially shiftable sliding component 50.

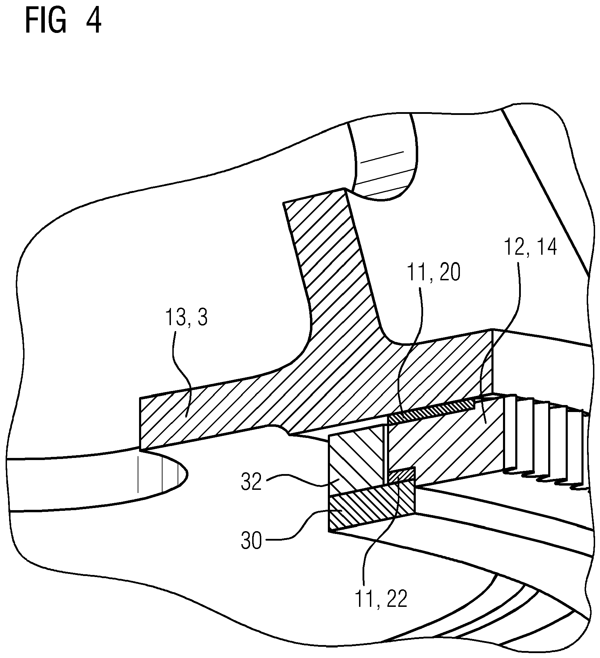

Figure 4 shows a perspective view of a yaw bearing assembly 10 configured to be used with an outer yaw drive 16 according to another embodiment of the invention. The first yaw bearing component 12 is configured as a yaw ring 14 with a gearing provided at its outer circumference. The yaw bearing assembly 10 comprises a clamp ring 30 which is attached to the axial ring flange 32 and to the second yaw bearing component 13. The second yaw bearing component 13 is coupled to the nacelle 3 of the wind turbine 1 so that the nacelle 3 can rotate about the yaw axis 6 if the second yaw bearing component 13 rotates. Sliding components 11 are encapsulated at the first yaw bearing component 12 and the second yaw bearing component 13 so that these components can rotate relative to each other. In this perspective, a top-axial sliding pad 20 and a bottom-axial sliding pad 22 can be seen.

In Figure 4, the sliding components 11 are encapsulated at the first yaw bearing component 12. More specifically, the top-axial sliding pads 20 and the bottom-axial sliding pads 22 are encapsulated at the first yaw bearing component 12. From this perspective, the radial sliding pads 21 cannot be seen, but they can also be encapsulated at the first yaw bearing component 12. Any of these sliding components 11 is suited to be an axially shiftable sliding component 50.

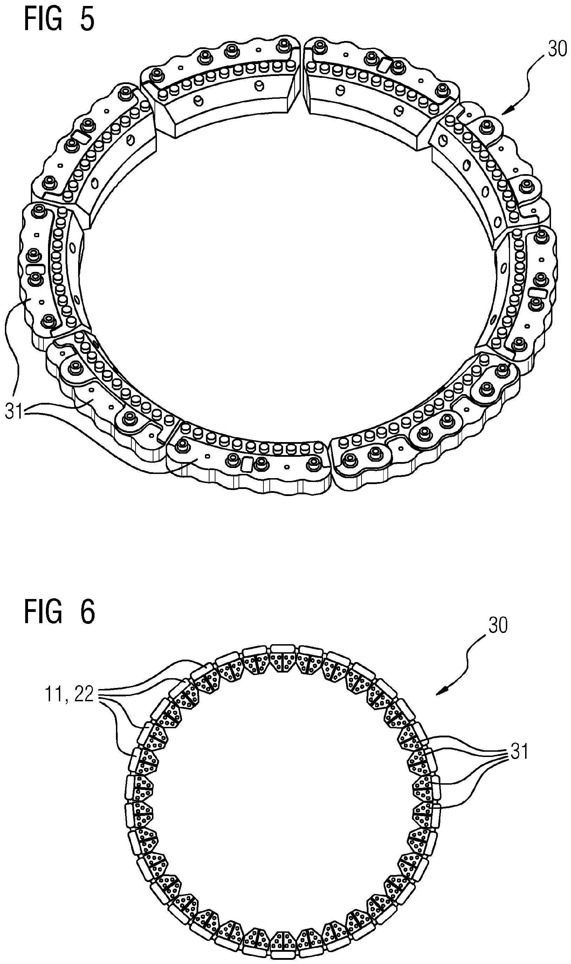

Figure 5 shows a clamp ring 30 comprising a plurality of clamps 31 according to one embodiment of the invention, wherein the clamp ring 30 shown in this figure can be arranged at the inner circumference of the yaw ring 14 for support. The clamp ring 30 comprises a plurality of insertion holes through which fastening means can be inserted to couple the clamp ring 30 to the axial ring flange 32 and to the second yaw bearing component 13.

Figure 6 shows a clamp ring 30 comprising a plurality of clamps 31 according to another embodiment of the invention, wherein the clamp ring 30 shown in this figure comprises a plurality of sliding components 11, which are a plurality of sliding pads. The sliding pads can for example be bottom-axial sliding pads 22 if the clamp ring 30 is placed as shown in Figure 3. The clamp ring 30 comprises a plurality of insertion holes through which fastening means can be inserted to couple the clamp ring 30 to the axial ring flange 32 and to the second yaw bearing component 13.

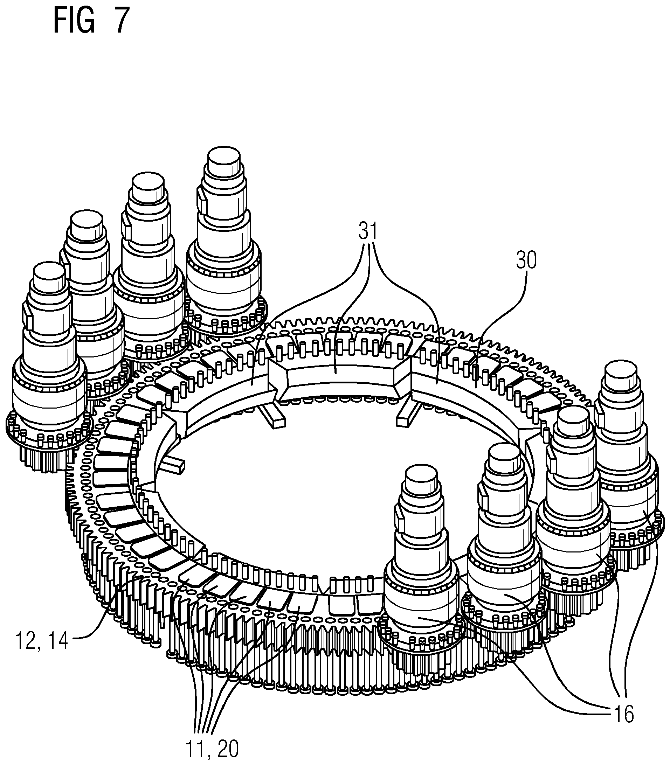

Figure 7 shows a first yaw bearing component 12 with an outer yaw drive 16 comprising a yaw ring 14 to which a plurality of clamps 31 configured as a clamp ring 30 are coupled. The clamp ring 30 is similar to the one shown in Figure 5, with clamps 31 arranged at the inner radial circumference of the yaw ring 14. A plurality of bolts extending from the clamp ring 30 can be seen, which are used for coupling the clamp ring 30 to the second yaw bearing component 13. A plurality of sliding components 11 configured as top-axial sliding pads 20 can be seen in the figure as well.

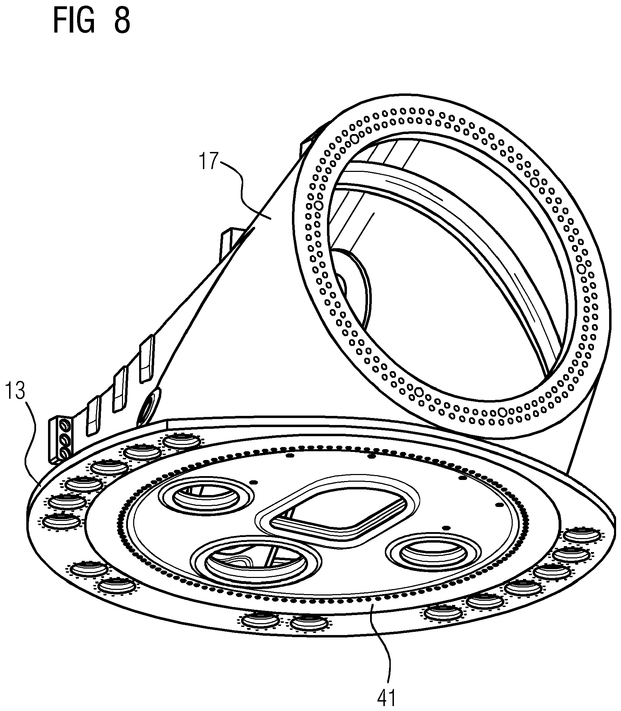

Referring to Figure 8, a second yaw bearing component 13 joined with a support structure 17 with the shape of a swan neck, is shown. The second yaw bearing component 13 comprises a shape which is also called a bed frame or bed plate or base frame. The second yaw bearing component 13 comprises a sliding surface 41 on which the sliding components 11 can slide. Hence, as the sliding surface 41 is at the side of the second yaw bearing component 13, the sliding components 11 are arranged or encapsulated at the side of the first yaw bearing component 12, wherein the sliding surface 41 of the sliding components 11 slides on the sliding surface 41 of the second yaw bearing component 13.

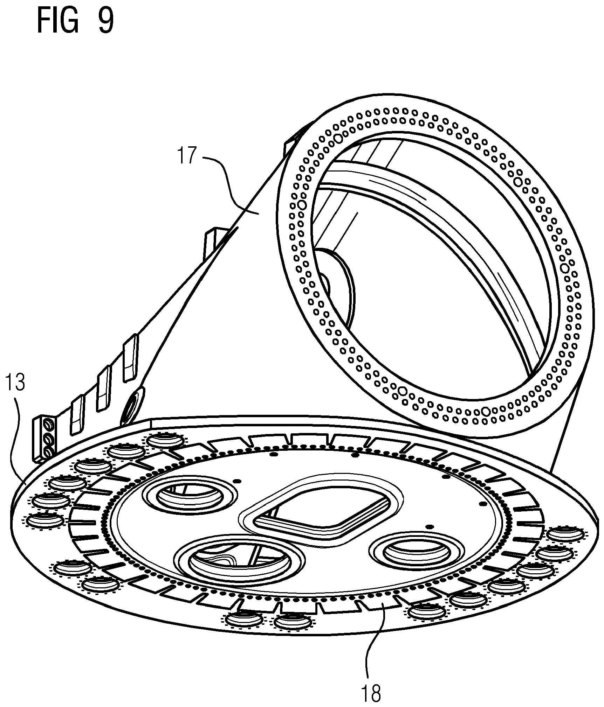

Figure 9 shows a second yaw bearing component 13 according to another embodiment of the invention with a plurality of pockets 18 for the encapsulation of the sliding components 11. Hence, as the pockets 18 and therefore the encapsulation of the sliding components 11 is at the side of the second yaw bearing component 13, the sliding components 11 are arranged or encapsulated at the side of the second yaw bearing component 13, wherein the sliding surface 41 of the sliding components 11 slides on the sliding surface 41 of the first yaw bearing component 12.

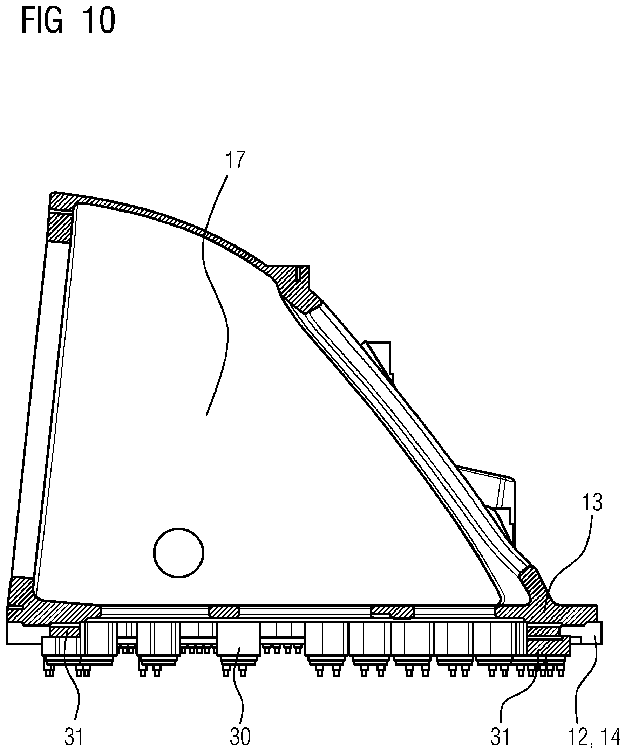

Figure 10 shows a second yaw bearing component 13 according to another embodiment of the invention coupled to a clamp ring 30 comprising a plurality of clamps 31. The second yaw bearing component 13 is coupled to the support structure 17 and separated from the first yaw bearing component 12, i.e. from the yaw ring 14, by means of sliding components 11, not shown in this figure. A tilt angle can be appreciated in the figure.

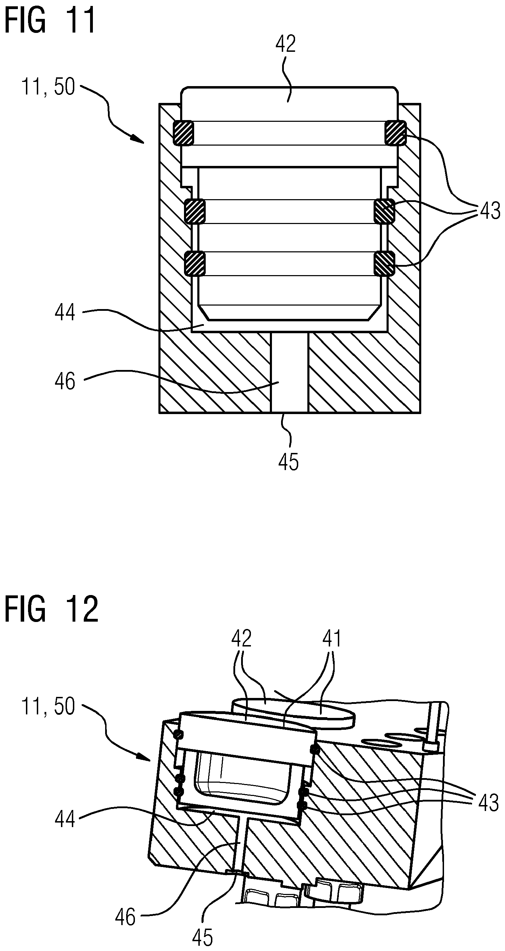

Figures 11 and 12 show a sliding component 11 configured as an axially shiftable sliding component 50 comprising a piston 40, a sliding pad 42, a plurality of seals 43 and a pressure chamber 44. Through a hydraulic fluid inlet 45, a hydraulic fluid 46 enters the pressure chamber 44, thereby driving the piston 40 in the direction opposite to the pressure chamber 44 through the generated pressure. This increases the friction of a sliding surface 41 of the sliding pad 42 against the abutting surface of the first yaw bearing component 12 or the second yaw bearing component 13, thereby increasing the load taken by the sliding component 11. The seals 43 prevent the hydraulic fluid 46 from escaping the pressure chamber 44, avoiding the risk of leakage.

### Reference List

- 1: Wind turbine
- 2: Tower
- 3: Nacelle
- 4: Hub
- 5: Blade
- 6: Yaw axis
- 7: Rotor axis
- 10: Yaw bearing assembly
- 11: Sliding component
- 12: First yaw bearing component
- 13: Second yaw bearing component
- 14: Yaw ring
- 15: Inner yaw drive
- 16: Outer yaw drive
- 17: Support structure
- 18: Pockets
- 20: Top-axial sliding pad
- 21: Radial sliding pad
- 22: Bottom-axial sliding pad
- 23: Pocket
- 30: Clamp ring
- 31: Clamps
- 32: Axial ring flange
- 40: Piston
- 41: Sliding surface
- 42: Sliding pad
- 43: Seal
- 44: Pressure chamber
- 45: Hydraulic fluid inlet
- 46: Hydraulic fluid
- 50: Axially shiftable sliding component
- 51: Fixed sliding component

## Claims

1. A yaw bearing assembly (10) configured to rotatably couple a nacelle (3) to a tower (2) of a wind turbine (1) to allow a rotation of the nacelle (3) relative to the tower (2) about a yaw axis (6), the yaw bearing assembly (10) comprising a first yaw bearing component (12) fixed to the tower (2) or being integrally formed with the tower (2),
a second yaw bearing component (13) fixed to the nacelle (3) or being integrally formed with the nacelle (3), and
a plurality of sliding components (11) having a sliding surface (41) and being arranged between the first yaw bearing component (12) and the second yaw bearing component (13), wherein
at least one of the sliding components (11) is an axially shiftable sliding component (50) configured to axially shift in the direction of the yaw axis (6) to change the preload and/or friction between the first yaw bearing component (12) and the second yaw bearing component (13)
and at least one of the further sliding components (11) is a fixed sliding component (51) configured to be axially fixed to a position at the first yaw bearing component (12) or at the second yaw bearing component (13), wherein said axially shiftable sliding component (50) comprises a piston (40), a sliding pad (42), at least a seal (43) and a pressure chamber (44), wherein
the plurality of sliding components (11) comprising the at least one sliding component and the at least one further sliding component is divided into a first group of sliding components (11) and a second group of sliding components (11), wherein the first group of sliding components (11) is located at the front part of the yaw bearing assembly (10) and the second group of sliding components (11) is located at the rear part of the yaw bearing assembly (10),
wherein the front part is configured to be oriented towards a hub (4) of the wind turbine(1) and the rear part is configured to be oriented away from the hub (4) of the wind turbine(1),
**characterized in that** the first group of sliding components (11) only consists of said axially shiftable sliding components (50), and **in that** the second group of sliding components (11) comprises said axially shiftable sliding components (50).

2. The yaw bearing assembly (10) according to claim 1, **characterized in that** the first half of sliding components (11) configured to be oriented towards the hub (4) of the wind turbine (1) form the first group of sliding components (11) .

3. The yaw bearing assembly (10) according to any of the preceding claims, **characterized in that** the first yaw bearing component (12) is a yaw ring (14).

4. The yaw bearing assembly (10) according to any of the preceding claims, **characterized in that** said yaw bearing assembly (10) further comprises a clamp ring (30), wherein at least one of the sliding components (11) is arranged at the clamp ring (30).

5. The yaw bearing assembly (10) according to any of the preceding claims, **characterized in that** said yaw bearing assembly (10) is coupled to a yaw brake assembly configured to apply a braking torque to lock the rotation of the nacelle (3) about the yaw axis (6).

6. The yaw bearing assembly (10) according to claim 5, **characterized in that** the yaw brake assembly (10) comprises a brake disc and a brake pad.

7. Method of changing the preload and/or friction between a first yaw bearing component (12) and a second yaw bearing component (13) of a yaw bearing assembly (10) according to any of the preceding claims, the method comprising the step of axially shifting the axially shiftable sliding component (50) in the direction of the yaw axis (6).

## Patentansprüche

1. Azimutlageranordnung (10), die dazu ausgelegt ist, eine Gondel (3) mit einem Turm (2) einer Windkraftanlage (1) drehbar zu koppeln, um eine Drehung der Gondel (3) relativ zu dem Turm (2) um eine Azimutachse (6) zu ermöglichen, wobei die Azimutlageranordnung (10) Folgendes umfasst
eine erste Azimutlagerkomponente (12), die an dem Turm (2) fixiert oder integral mit dem Turm (2) ausgebildet ist,
eine zweite Azimutlagerkomponente (13), die an der Gondel (3) fixiert oder integral mit der Gondel (3) ausgebildet ist, und eine Mehrzahl von Gleitkomponenten (11), die eine Gleitfläche (41) aufweisen und zwischen der ersten Azimutlagerkomponente (12) und der zweiten Azimutlagerkomponente (13) angeordnet sind, wobei
mindestens eine der Gleitkomponenten (11) eine axial verschiebbare Gleitkomponente (50) ist, die dazu ausgelegt ist, sich axial in der Richtung der Azimutachse (6) zu verschieben, um die Vorlast und/oder Reibung zwischen der ersten Azimutlagerkomponente (12) und der zweiten Azimutlagerkomponente (13) zu verändern,
und mindestens eine der weiteren Gleitkomponenten (11) eine fixierte Gleitkomponente (51) ist, die dazu ausgelegt ist, axial an einer Position an der ersten Azimutlagerkomponente (12) oder an der zweiten Azimutlagerkomponente (13) fixiert zu sein, wobei die axial verschiebbare Gleitkomponente (50) einen Kolben (40), ein Gleitkissen (42), mindestens eine Dichtung (43) und eine Druckkammer (44) umfasst, wobei
die Mehrzahl von Gleitkomponenten (11), die die mindestens eine Gleitkomponente und die mindestens eine weitere Gleitkomponente umfasst, in eine erste Gruppe von Gleitkomponenten (11) und eine zweite Gruppe von Gleitkomponenten (11) unterteilt ist, wobei sich die erste Gruppe von Gleitkomponenten (11) an dem vorderen Teil der Azimutlageranordnung (10) befindet und sich die zweite Gruppe von Gleitkomponenten (11) an dem hinteren Teil der Azimutlageranordnung (10) befindet,
wobei der vordere Teil dazu ausgelegt ist, zu einer Nabe (4) der Windkraftanlage (1) hin ausgerichtet zu sein, und der hintere Teil dazu ausgelegt ist, von der Nabe (4) der Windkraftanlage (1) weg ausgerichtet zu sein,
**dadurch gekennzeichnet, dass** die erste Gruppe von Gleitkomponenten (11) nur aus den axial verschiebbaren Gleitkomponenten (50) besteht, und dadurch, dass die zweite Gruppe von Gleitkomponenten (11) die axial verschiebbaren Gleitkomponenten (50) umfasst.

2. Azimutlageranordnung (10) nach Anspruch 1, **dadurch gekennzeichnet, dass** die erste Hälfte von Gleitkomponenten (11), die dazu ausgelegt ist, zu der Nabe (4) der Windkraftanlage (1) hin ausgerichtet zu sein, die erste Gruppe von Gleitkomponenten (11) bildet.

3. Azimutlageranordnung (10) nach einem der vorhergehenden Ansprüche, **dadurch gekennzeichnet, dass** die erste Azimutlagerkomponente (12) ein Azimutring (14) ist.

4. Azimutlageranordnung (10) nach einem der vorhergehenden Ansprüche, **dadurch gekennzeichnet, dass** die Azimutlageranordnung (10) ferner einen Klemmring (30) umfasst, wobei mindestens eine der Gleitkomponenten (11) an dem Klemmring (30) angeordnet ist.

5. Azimutlageranordnung (10) nach einem der vorhergehenden Ansprüche, **dadurch gekennzeichnet, dass** die Azimutlageranordnung (10) mit einer Azimutbremsenanordnung gekoppelt ist, die dazu ausgelegt ist, ein Bremsmoment aufzubringen, um die Drehung der Gondel (3) um die Azimutachse (6) zu sperren.

6. Azimutlageranordnung (10) nach Anspruch 5, **dadurch gekennzeichnet, dass** die Azimutbremsenanordnung (10) eine Bremsscheibe und einen Bremsbelag umfasst.

7. Verfahren zum Verändern der Vorlast und/oder Reibung zwischen einer ersten Azimutlagerkomponente (12) und einer zweiten Azimutlagerkomponente (13) einer Azimutlageranordnung (10) nach einem der vorhergehenden Ansprüche, wobei das Verfahren den Schritt axiales Verschieben der axial verschiebbaren Gleitkomponente (50) in der Richtung der Azimutachse (6) umfasst.

## Revendications

1. Assemblage de palier d'orientation (10) configuré pour coupler en rotation une nacelle (3) à une tour (2) d'une éolienne (1) pour permettre une rotation de la nacelle (3) par rapport à la tour (2) autour d'un axe d'orientation (6), l'assemblage de palier d'orientation (10) comprenant
un premier composant de palier d'orientation (12) fixé à la tour (2) ou étant formé d'un seul tenant avec la tour (2),
un deuxième composant de palier d'orientation (13) fixé à la nacelle (3) ou étant formé d'un seul tenant avec la nacelle (3), et
une pluralité de composants coulissants (11) ayant une surface coulissante (41) et étant agencés entre le premier composant de palier d'orientation (12) et le deuxième composant de palier d'orientation (13), dans lequel
au moins l'un des composants coulissants (11) est un composant coulissant axialement déplaçable (50) configuré pour se déplacer axialement dans la direction de l'axe d'orientation (6) afin de modifier la précharge et/ou le frottement entre le premier composant de palier d'orientation (12) et le deuxième composant de palier d'orientation (13)
et au moins l'un des autres composants coulissants (11) est un composant coulissant fixe (51) configuré pour être fixé axialement à une position au niveau du premier composant de palier d'orientation (12) ou au niveau du deuxième composant de palier d'orientation (13), dans lequel ledit composant coulissant déplaçable axialement (50) comprend un piston (40), un patin coulissant (42), au moins un joint (43) et une chambre de pression (44), dans lequel
la pluralité de composants coulissants (11) comprenant l'au moins un composant coulissant et l'au moins un autre composant coulissant est divisée en un premier groupe de composants coulissants (11) et un deuxième groupe de composants coulissants (11), dans lequel le premier groupe de composants coulissants (11) est situé au niveau de la partie avant de l'assemblage de palier d'orientation (10) et le deuxième groupe de composants coulissants (11) est situé au niveau de la partie arrière de l'assemblage de palier d'orientation (10),
dans lequel la partie avant est configurée pour être orientée vers un moyeu (4) de l'éolienne (1) et la partie arrière est configurée pour être orientée à l'opposé du moyeu (4) de l'éolienne (1),
**caractérisé en ce que** le premier groupe de composants coulissants (11) est constitué uniquement desdits composants coulissants déplaçables axialement (50), et **en ce que** le deuxième groupe de composants coulissants (11) comprend lesdits composants coulissants déplaçables axialement (50).

2. Assemblage de palier d'orientation (10) selon la revendication 1,
**caractérisé en ce que** la première moitié de composants coulissants (11) configurée pour être orientée vers le moyeu (4) de l'éolienne (1) forme le premier groupe de composants coulissants (11).

3. Assemblage de palier d'orientation (10) selon l'une des revendications précédentes, **caractérisé en ce que** le premier composant de palier d'orientation (12) est une bague d'orientation (14).

4. Assemblage de palier d'orientation (10) selon l'une des revendications précédentes, **caractérisé en ce que** ledit assemblage de palier d'orientation (10) comprend en outre une bague de serrage (30), dans lequel au moins un des composants coulissants (11) est agencé au niveau de la bague de serrage (30) .

5. Assemblage de palier d'orientation (10) selon l'une des revendications précédentes, **caractérisé en ce que** ledit assemblage de palier d'orientation (10) est couplé à un assemblage de frein d'orientation configuré pour appliquer un couple de freinage pour bloquer la rotation de la nacelle (3) autour de l'axe d'orientation (6).

6. Assemblage de palier d'orientation (10) selon la revendication 5, **caractérisé en ce que** l'assemblage de frein d'orientation (10) comprend un disque de frein et une plaquette de frein.

7. Procédé de modification de la précharge et/ou du frottement entre un premier composant de palier d'orientation (12) et un deuxième composant de palier d'orientation (13) d'un assemblage de palier d'orientation (10) selon l'une des revendications précédentes, le procédé comprenant l'étape de déplacement axial du composant coulissant déplaçable axialement (50) dans la direction de l'axe d'orientation (6).
